# EUROPEAN PATENT SPECIFICATION

(11) **EP 4 201 755 B1**
(45) Date of publication and mention of the grant of the patent: **28.08.2024**
(21) Application number: 22214144.2
(22) Date of filing: 16.12.2022
(51) Int. Cl.: B60R 21/26, B60R 21/268, B60R 21/30, C06D 5/00, H01M 8/00

(54) **SAFETY DEVICE AND METHOD FOR OPERATING SAFETY DEVICE**
SICHERHEITSVORRICHTUNG UND VERFAHREN ZUM BETREIBEN EINER SICHERHEITSVORRICHTUNG
DISPOSITIF DE SÉCURITÉ ET PROCÉDÉ DE FONCTIONNEMENT D'UN DISPOSITIF DE SÉCURITÉ

(30) Priority: 21.12.2021 JP 2021207114
(43) Date of publication of application: 28.06.2023
(73) Proprietor: Daicel Corporation, Osaka 530-0011 (JP)
(72) Inventor: Katsuda, Nobuyuki, Tokyo, 108-8230 (JP)
(74) Representative: Grünecker Patent- und Rechtsanwälte PartG mbB

(56) References cited:
- WO-A1-98/26960
- CN-A- 109 435 887
- CN-U- 212 604 970
- US-E- R E37 843

## Description

### Technical Field

The present invention relates to a safety device and a method for operating a safety device.

### Background Art

A safety device is known that restrains the body of a person by inflating and deploying an airbag and protects the person from an impact. The safety device is used, for example, to protect an occupant of a vehicle. Such a safety device is configured to inflate and deploy the airbag between the occupant and a structure body of the vehicle by supplying gas to the airbag when an impact to the vehicle is detected and protect the occupant from the impact.

In this regard, Patent Document 1 discloses an airbag system in which a mixture of gases of hydrogen and oxygen is ignited to generate water vapor and the water vapor is supplied to an airbag to inflate and deploy the airbag. In the airbag system of Patent Document 1, a container filled with hydrogen and a container filled with oxygen are connected to a common combustion chamber. By breaking, with an opener device, a disk that closes an outlet of each of the containers, the gas of each container is discharged to the combustion chamber and ignited by an igniter arranged in the combustion chamber.

Patent Document 3 is considered to represent the closest prior art and discloses a safety device in accordance with the preamble of independent claim 1, and a method of operating a safety device in accordance with the preamble of independent claim 13.

### Citation List

### Patent Document

Patent Document 1: JP 3607215 B2
Patent Document 2: US 5 582 806 A
Patent Document 3: WO 98/26960 A1

### Summary of Invention

### Technical Problem

In the safety device described above, the container is filled with the volume of hydrogen required to inflate and deploy the airbag, and when the safety device is operated, the hydrogen in the container is used up. However, in a case where the container is filled with the volume of hydrogen while exceeding an appropriate volume for inflation and deployment of the airbag, the hydrogen in the container is used up to generate water vapor; therefore, an excessive volume of water vapor may be supplied to the airbag. In such a case, the airbag may explode, and sufficient cushioning properties may not be applied to the airbag. In other words, there is concern that the airbag is not appropriately inflated and deployed.

The technique of the present disclosure is made in view of the aforementioned circumstances, and an object of the present disclosure is to provide the technique that can appropriately inflate and deploy an airbag in a safety device configured to inflate and deploy the airbag by using hydrogen.

### Solution to Problem

To solve the above problems, a safety device and a method of operating said safety device are provided in claims 1 and 13 respectively. In other words, the technique of the present disclosure is a safety device including: an airbag supplied with water vapor to be inflated and deployed; an ignition portion configured to ignite a mixed fluid of hydrogen and oxygen to generate water vapor to be supplied to the airbag; a first flow path configured to guide hydrogen to the ignition portion from a first container filled with a volume of hydrogen in a pressurized state, the volume of the hydrogen in the first container exceeding an appropriate volume for inflation and deployment of the airbag; a first opening and closing portion disposed in the first flow path and switchable between a closed state where a flow of hydrogen from the first container is shut off and an opened state where the flow of hydrogen from the first container is opened; an introduction section disposed at a position downstream of the first opening and closing portion in the first flow path, the introduction section introducing oxygen supplied from an oxygen supply source into the first flow path and thereby mixes the oxygen with the hydrogen flowing through the first flow path; and
a water vapor flow path configured to guide the water vapor generated by the ignition portion from the ignition portion to the airbag, wherein before inflating and deploying the airbag, the first opening and closing portion is in the closed state, and at the time of inflating and deploying the airbag, the first opening and closing portion is temporarily switched from the closed state to the opened state to supply the appropriate volume of hydrogen to the ignition portion.

According to the safety device according to the present disclosure, only an appropriate volume of hydrogen can be extracted from the first container filled with the volume of hydrogen exceeding the appropriate volume for inflation and deployment of the airbag, and can be used for inflation and deployment of the airbag. As a result, the safety device according to the present disclosure can appropriately inflate and deploy the airbag.

Further, in the safety device according to the present disclosure, at the time of inflating and deploying the airbag, the first opening and closing portion may be switched to the closed state after a predetermined period of time elapses since the first opening and closing portion is shifted to the opened state.

Furthermore, in the safety device according to the present disclosure, at the time of inflating and deploying the airbag, the ignition portion may operate at a timing when the mixed fluid flows through the first flow path.

Additionally, in the safety device according to the present disclosure, the oxygen supply source may be air in the atmosphere outside the first flow path, and the introduction section may be configured to allow the air to flow into the first flow path from the outside of the first flow path and to prevent the fluid from flowing out from the inside of the first flow path to the outside of the first flow path.

Moreover, in the safety device according to the present disclosure, the introduction section may include a communicating port formed in a tube wall that defines the first flow path and allowing for communication between the inside and the outside of the first flow path, a check valve disposed to open and close the communicating port, and a throttle portion disposed on the tube wall in a manner that a portion having a cross-sectional area is smaller than cross-sectional areas of front and rear portions of the portion in the first flow path. The check valve is opened due to a pressure drop occurring when the hydrogen passes through the portion of the first flow path, and the air may flow into the first flow path.

Further, the safety device according to the present disclosure may further include: a second container as the oxygen supply source filled with oxygen; a second flow path configured to guide the oxygen from the second container to the introduction section; and
a second opening and closing portion disposed in the second flow path, wherein before inflating and deploying the airbag, the second opening and closing portion may shut off the second flow path, and at the time of inflating and deploying the airbag, the second opening and closing portion may open the second flow path.

Furthermore, in the safety device according to the present disclosure, the introduction section may be disposed at a position downstream of the first opening and closing portion in the first flow path, and may be disposed at a position in a manner that a flow path length from the introduction section to the ignition portion is shorter than a flow path length from the first opening and closing portion to the introduction section.

Additionally, in the safety device according to the present disclosure, the first opening and closing portion may be disposed at an inflow port of hydrogen in the first flow path.

Moreover, in the safety device according to the present disclosure, in the closed state, the first opening and closing portion allows for communication of the inside of the first flow path with the atmosphere outside the first flow path and thereby may allow the air to flow into the first flow path from the outside of the first flow path.

Further, in the safety device according to the present disclosure, the first flow path may be disposed with a position elevated from an upstream side toward a downstream side.

Furthermore, in the safety device according to the present disclosure, an inflow port of hydrogen in the first flow path may be disposed on the level equal to or higher than an upper end portion of an accommodating space of the first container.

Additionally, the safety device according to the present disclosure may be mounted in a vehicle, and the vehicle may use the hydrogen filled in the first container as a drive source.

Also, the technique according to the present disclosure is specified as a method for operating the safety device described above. In other words, the method according to the present disclosure may be a method for operating a safety device including: preparing a safety device including an airbag supplied with water vapor to be inflated and deployed, an ignition portion configured to ignite a mixed fluid of hydrogen and oxygen to generate water vapor to be supplied to the airbag, a first flow path configured to guide hydrogen to the ignition portion from a first container filled with a volume of hydrogen in a pressurized state, the volume exceeding an appropriate volume for inflation and deployment of the airbag, a first opening and closing portion disposed in the first flow path, an introduction section disposed at a position downstream of the first opening and closing portion in the first flow path, and a water vapor flow path configured to guide the water vapor generated by the ignition portion from the ignition portion to the airbag; temporarily switching the first opening and closing portion from a closed state where a flow of hydrogen from the first container is shut off to an opened state where the flow of hydrogen from the first container is opened to supply the appropriate volume of hydrogen to the ignition portion; mixing oxygen with the hydrogen flowing through the first flow path by introducing, via the introduction section into the first flow path, the oxygen supplied from an oxygen supply source; and igniting a mixed fluid of hydrogen and oxygen by the ignition portion to generate water vapor.

### Advantageous Effects of Invention

According to the technique according to the present disclosure, the airbag can be appropriately inflated and deployed in the safety device configured to inflate and deploy the airbag by using hydrogen.

### Brief Description of Drawing

FIG. 1 is a schematic configuration diagram schematically illustrating a vehicle including a safety device according to a first embodiment.
FIG. 2 is a diagram for describing an initiator according to the first embodiment.
FIG. 3 is a diagram for describing an introduction section according to the first embodiment, and is a diagram illustrating a state when hydrogen gas is not flowing through a first flow path.
FIG. 4 is a diagram for describing the introduction section according to the first embodiment, and is a diagram illustrating a state when hydrogen gas is flowing through the first flow path.
FIG. 5 is a diagram illustrating the configuration of a control device according to the first embodiment.
FIG. 6 is a diagram for describing a method for operating the safety device according to the first embodiment.
FIG. 7 is a diagram for describing a closed state of a first valve according to a first modified example of the first embodiment.
FIG. 8 is a diagram for describing an opened state of the first valve according to the first modified example of the first embodiment.
FIG. 9 is a diagram for describing the safety device according to a second modified example of the first embodiment.
FIG. 10 is a diagram for describing an example of a positional relationship between a discharge port and an accommodating space of a hydrogen tank.
FIG. 11 is a schematic configuration diagram schematically illustrating a vehicle equipped with a safety device according to a second embodiment of the present disclosure.
FIG. 12 is a diagram for describing a second valve according to the second embodiment.

### Description of Embodiments

Herein, embodiments of the present disclosure will be described below with reference to the drawings. Note that each of the configurations, combinations thereof, and the like in each embodiment is an example, and additions, omissions, substitutions, and other changes of the configuration may be made as appropriate. The present disclosure is not limited by the embodiments and is limited only by the claims.

The embodiments described below are modes in which the technique according to the present disclosure is applied to a vehicle that uses hydrogen as a drive source; however, the intended application of the technique according to the present disclosure is not limited to a vehicle. The technique of the present disclosure may be applied to a conveyance other than a vehicle, or may also be applied to a device other than a conveyance.

### First Embodiment

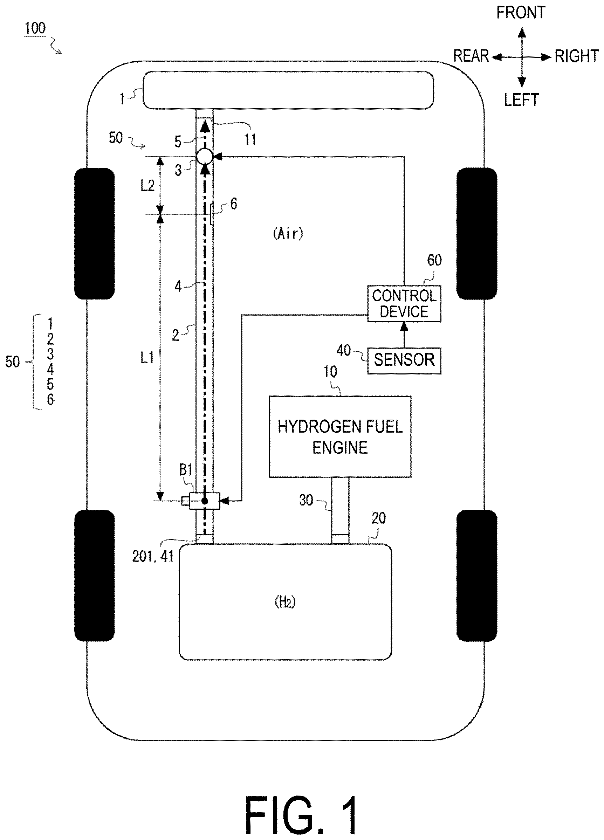

FIG. 1 is a schematic configuration diagram schematically illustrating a vehicle 100 including a safety device 50 according to a first embodiment. In FIG. 1, a front-rear direction (length direction) and a left-right direction (width direction) of the vehicle are indicated by arrows. As illustrated in FIG. 1, the vehicle 100 includes a hydrogen fuel engine 10, a hydrogen tank 20, a supply tube 30, a sensor unit 40, a safety device 50, and a control device 60.

### Vehicle

The vehicle 100 according to the present embodiment is an automobile that travels by using hydrogen as a drive source. More specifically, the vehicle 100 is a so-called hydrogen-powered automobile that includes the hydrogen fuel engine 10 fueled by hydrogen.

Note that when the technique according to the present disclosure is applied to a vehicle, the vehicle is not limited to a hydrogen-powered automobile including a hydrogen fuel engine. In addition to the hydrogen-powered automobile, the vehicle using hydrogen as a drive source may be, for example, a so-called hydrogen fuel cell vehicle equipped with a fuel cell that generates electricity by a chemical reaction of hydrogen and oxygen and configured to travel by a motor. Also, the vehicle may not use hydrogen as a drive source and may be an automobile configured to travel by an existing gasoline engine or a diesel engine.

### Hydrogen Fuel Engine

The hydrogen fuel engine 10 burns hydrogen and thus acquires traveling energy for the vehicle 100. The configuration of the hydrogen fuel engine 10 is similar to an engine used in a known hydrogen-powered automobile, and thus the detailed description thereof is omitted.

### Hydrogen Tank

The hydrogen tank 20 is a container filled with hydrogen gas in a pressurized state. The hydrogen tank 20 functions as a hydrogen supply source for the hydrogen fuel engine 10. Also, as described below, the hydrogen tank 20 also function as a hydrogen supply source for the safety device 50. Therefore, the hydrogen tank 20 is filled with the hydrogen gas that exceeds an appropriate volume (described below) for operation of the safety device 50. The hydrogen tank 20 corresponds to an example of "a first container" according to the present disclosure. Note that in the technique according to the present disclosure, the state of the hydrogen contained in the first container is not limited to gas. In the technique according to the present disclosure, the hydrogen in liquid form may be filled into the first container.

### Supply Tube

The supply tube 30 is a tube through which gas can flow, and connects the hydrogen tank 20 to the hydrogen fuel engine 10. The hydrogen gas filled in the hydrogen tank 20 is supplied through the supply tube 30 to the hydrogen fuel engine 10.

### Sensor Unit

The sensor unit 40 is a technique for detecting information on the vehicle 100. As an example, the sensor unit 40 is configured to include a plurality of sensors. The sensor unit 40 may include, for example, a sensor that detects a state of own vehicle, such as a vehicle speed, a travel distance, an operating state of a brake, an operating state of a direction indicator, a steering state, a yaw rate, and the gravity (G). Also, the sensor unit 40 may include, for example, a sensor that detects a state of another vehicle or an obstacle present around own vehicle (the vehicle 100), such as a radar device that detects an obstacle by capturing an image of the surroundings of the vehicle 100 by a camera and image processing the captured image, a laser radar, and a millimeter wave radar.

### Safety Device

The safety device 50 inflates an airbag, which is indicated by reference numeral 1, when the vehicle 100 collides or when a collision of the vehicle is expected, and deploys the airbag 1 between an obstacle (a collided object) outside the vehicle and a structure body of the vehicle 100 to protect an occupant from the collision. As illustrated in FIG. 1, the safety device 50 includes the airbag 1, a first tube 2, an initiator 3, a first flow path 4, a water vapor flow path 5, an introduction section 6, and a first valve B1.

### Airbag

The airbag 1 is a bag body that inflates and deploys when water vapor is supplied. The airbag 1 may be, for example, a front airbag that protects an occupant from an impact at the time of a front surface collision (front collision) of the vehicle 100, or may be a side airbag that protects an occupant from an impact at the time of a side surface collision (side collision) of the vehicle 100. Further, the airbag may be an airbag for pedestrian protection. Furthermore, the safety device 50 may be configured to include a plurality of airbags 1.

### First Tube

The first tube 2 is a tube through which gas can flow, and connects the hydrogen tank 20 to the airbag 1. The first tube 2 connects a discharge port, which is indicated by reference numeral 201, of the hydrogen tank 20 and a supply port, which is indicated by reference numeral 11, of the airbag 1, thereby connecting the hydrogen tank 20 to the airbag 1. An internal space of the first tube 2 forms a flow path for supplying gas (hydrogen gas, oxygen gas, and water vapor) to the airbag 1.

### Initiator

The initiator 3 operates in accordance with the control of the control device 60 and ignites a mixed fluid of hydrogen gas and oxygen gas, thereby generating water vapor to be supplied to the airbag 1. As illustrated in FIG. 1, the initiator 3 is disposed in the first tube 2. The initiator 3 according to the present embodiment is configured as an electric igniter. The initiator 3 corresponds to an example of "an ignition portion" according to the present disclosure. The ignition portion according to the present disclosure is not limited to an electric igniter.

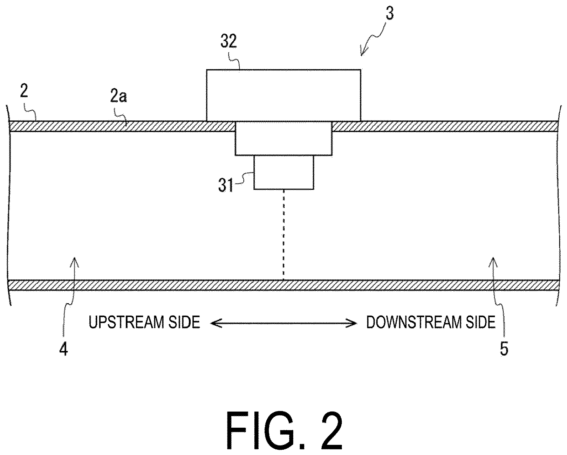

FIG. 2 is a diagram for describing the initiator 3 according to the first embodiment. In FIG. 2, a cross-section near the initiator 3 of the safety device 50 is illustrated. As illustrated in FIG. 2, the initiator 3 includes an ignition portion 31 and a connector portion 32. The initiator 3 is fixed to a tube wall 2a of the first tube 2 in a manner that the ignition portion 31 is disposed in the first tube 2.

Known ignition powder is contained in the ignition portion 31 of the initiator 3. An ignition current is supplied from an exterior portion (the control device 60 in the present example) via the connector portion 32 to the ignition portion 31; therefore, the ignition portion 31 operates. When the ignition portion 31 is operated, the ignition powder housed in the ignition portion 31 burns, and combustion products including flames and high-temperature gas are released into the first tube 2. As a result, the mixed fluid of hydrogen gas and oxygen gas present in the first tube 2 is ignited, and water vapor is generated by a combustion reaction. Further, in the specification, that the ignition portion 31 of the initiator 3 operates may be expressed simply as "the initiator 3 operates". Furthermore, the initiator 3 may ignite by continuously generating sparks between terminals without ignition powder.

### First Flow Path

As illustrated in FIG. 1, the first flow path 4 is a region of the internal space of the first tube 2 from the discharge port 201 of the hydrogen tank 20 to the initiator 3. In other words, the first flow path 4 is a flow path that guides hydrogen gas from the hydrogen tank 20 to the initiator 3. The hydrogen gas filled in the hydrogen tank 20 flows through the first flow path 4 and thus is supplied from the hydrogen tank 20 to the initiator 3. Here, an inflow port of the first flow path 4 is indicated by reference numeral 41 in FIG. 1. The inflow port 41 is, that is, an upstream end of the first flow path 4 in a flow direction of the gas, and in the present example, coincides with the discharge port 201 of the hydrogen tank 20.

### First Valve

As illustrated in FIG. 1, the first valve B1 is disposed in the first flow path 4. The first valve B1 opens and closes in accordance with the control of the control device 60, and thus switches between the supply of hydrogen gas to the initiator 3 and the interruption of the supply. The first valve B1 corresponds to an example of "a first opening and closing portion" according to the present disclosure. The first valve B1 according to the present embodiment is, for example, an electrically driven gate valve. An example of a method for driving the first valve B 1 may include a solenoid valve driven by a solenoid or an electric valve driven by a motor. However, the first opening and closing portion according to the present disclosure is not limited to such a method.

The first valve B1 is configured to be switchable in accordance with the control of the control device 60 between a closed state where the flow of hydrogen gas from the hydrogen tank 20 is shut off and an opened state where the flow of hydrogen gas from the hydrogen tank 20 is opened. When the first valve B1 is in the closed state, the flow of hydrogen gas from the hydrogen tank 20 is shut off, and thus the hydrogen gas is not supplied to the initiator 3. In addition, the hydrogen gas is filled into the hydrogen tank 20 in a pressurized state. Accordingly, when the first valve B1 is in the opened state, the flow of hydrogen gas from the hydrogen tank 20 is opened, and thus the hydrogen gas continues to flow through the first flow path 4. In other words, during the period in which the first valve B1 is in the opened state, the hydrogen gas continues to be supplied to the initiator 3. Note that the configuration of the first valve B 1 is similar to a known valve structure; therefore, the detailed description thereof is omitted. Additionally, in the example illustrated in FIG. 1, the first valve B 1 is disposed at a position close to the hydrogen tank 20 in the middle of the first flow path 4, but the first valve B1 may be disposed on the inflow port 41 of the first flow path 4.

### Introduction Section

As illustrated in FIG. 1, the introduction section 6 is disposed downstream of the first valve B 1 in the first flow path 4 and at a position between the initiator 3 and the first valve B 1. The introduction section 6 is configured to introduce air into the first flow path 4 from the atmosphere (outside air) (outside of the first tube 2) outside the first flow path 4. As a result, oxygen gas contained in the air is introduced into the first flow path 4, and the oxygen gas is mixed with the hydrogen gas flowing through the first flow path 4. In the present embodiment, the air in the atmosphere outside the first flow path 4 corresponds to an example of "an oxygen supply source" according to the present disclosure.

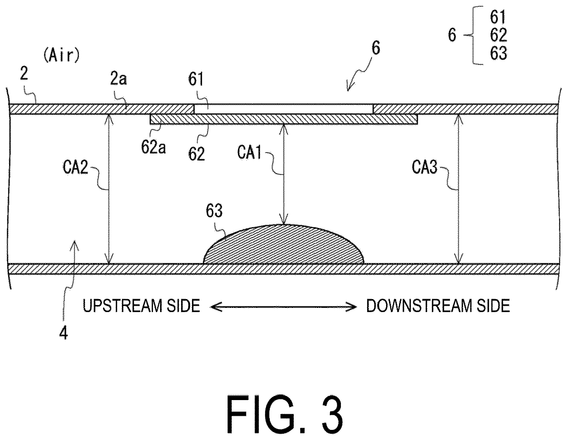

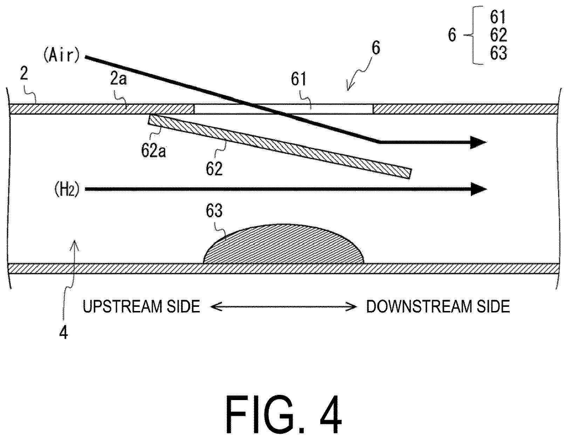

The introduction section 6 utilizes a pressure drop due to the Venturi effect to introduce the air from the atmosphere. FIGS. 3 and 4 are diagrams for describing the introduction section 6 according to the first embodiment. In FIGS. 3 and 4, a cross-section near the introduction section 6 of the safety device 50 is illustrated. FIG. 3 illustrates a state when the hydrogen gas is not flowing through the first flow path 4, and FIG. 4 illustrates a state when the hydrogen gas is flowing through the first flow path 4.

As illustrated in FIGS. 3 and 4, the introduction section 6 is configured to include a communicating port 61, a check valve 62, and a throttle portion 63. The communicating port 61 is formed in the tube wall 2a, which defines the first flow path 4, of the first tube 2, and is an opening that allows for communication between the inside and the outside of the first flow path 4. The check valve 62 is a lid disposed inside the tube wall 2a to open and close the communicating port 61. The check valve 62 includes an end portion 62a, on the upstream side, hinged to the tube wall 2a. By rotating the check valve 62 about the end portion 62a as an axis, the introduction section 6 can switch between a state where the communicating port 61 is closed as illustrated in FIG. 3 and a state where the communicating port 61 is opened as illustrated in FIG. 4. The throttle portion 63 is a projected portion formed on the inner side of the tube wall 2a, and is disposed at a position opposed to the communicating port 61 and the check valve 62. Here, the cross-sectional area of the first flow path 4 (the area of the cross-sectional area orthogonal to the flow direction, also referred to as the flow path area) in a region near the communicating port 61 (a region of the first flow path 4, which is narrowed by the throttle portion 63) is defined as CA1, the cross-sectional area of the first flow path 4 in a region near the communicating port 61 and adjacent to the upstream side is defined as CA2, and the cross-sectional area of the first flow path 4 in a region near the communicating port 61 and adjacent to the downstream side is defined as CA3. In this case, the throttle portion 63 is disposed, and thus CA1 is smaller than CA2 and CA3. In other words, in the first flow path 4, a portion (near the communicating port 61) is narrower than front and rear portions of the portion. Therefore, the hydrogen gas flowing through the first flow path 4 increases the flow rate near the communicating port 61 having the narrow flow path. As the flow rate of hydrogen gas increases, a pressure drop in the first flow path 4 is generated at the throttle portion 63 by the Venturi effect.

As illustrated in FIG. 3, in a state where the hydrogen gas is not flowing through the first flow path 4, that is, in a state where the first valve B 1 is in the closed state and the flow of hydrogen gas from the hydrogen tank 20 is shut off, the introduction section 6 is maintained in a state where the communicating port 61 is closed by the check valve 62. The check valve 62 may be maintained in the closed state, for example, by a biasing member such as a spring or by own elastic force.

As illustrated in FIG. 4, in a state where the hydrogen gas is flowing through the first flow path 4, that is, in a state where the first valve B1 is in the opened state and the flow of hydrogen gas from the hydrogen tank 20 is opened, the suction force that introduces the air in the atmosphere into the first flow path 4 is generated near the communicating port 61 by a pressure drop generated when the hydrogen gas passes near the communicating port 61 of the first flow path 4. Therefore, the check valve 62 opens, and the air flows into the first flow path 4. As just described, oxygen gas contained in the air in the atmosphere is introduced into the first flow path 4, and the oxygen gas is mixed with the hydrogen gas flowing through the first flow path 4.

Also, in a state where the hydrogen gas flows through the first flow path 4, the check valve 62 is opened; however, the pressure near the communicating port 61 is lower than the outside pressure due to the Venturi effect, and thus fluid is suppressed from flowing out from the inside of the first flow path 4 through the communicating port 61 to the outside. In other words, the introduction section 6 is configured to allow the inflow of the air from the outside to the inside of the first flow path 4 and prevent outflow of the fluid (oxygen gas or hydrogen gas) from the inside to the outside of the first flow path 4.

When the first valve B1 is switched from the opened state to the closed state and thus the flow of hydrogen gas is shut off, the communicating port 61 is closed by the check valve 62, and the state illustrated in FIG. 4 shifts to the state illustrated in FIG. 3. Therefore, only during the period in which the hydrogen gas is flowing through the first flow path 4, the introduction section 6 introduces the oxygen gas into the first flow path 4. Note that the opening area of the communicating port 61 of the introduction section 6 is set in a manner that an appropriate volume of oxygen gas is supplied to the initiator 3 for inflation and deployment of the airbag 1.

### Water Vapor Flow Path

As illustrated in FIG. 1, the water vapor flow path 5 is a region of the internal space of the first tube 2 from the initiator 3 to the airbag 1 (more specifically, to the supply port 11). In other words, the water vapor flow path 5 is a flow path that guides the water vapor generated by the operation of the initiator 3 from the initiator 3 to the airbag 1.

### Control Device

The control device 60 executes a program and thereby controls the first valve B1 and the initiator 3 of the safety device 50 based on the information acquired from the sensor unit 40. The control device 60 includes, as hardware, a processor such as a central processing unit (CPU), a digital signal processor (DSP), or a field-programmable gate array (FPGA), and a main storage unit such as a random access memory (RAM) or a read only memory (ROM).

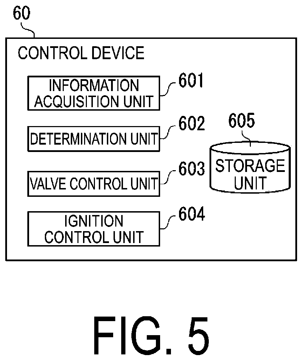

FIG. 5 is a diagram illustrating the configuration of the control device 60 according to the first embodiment. The control device 60 includes an information acquisition unit 601, a determination unit 602, a valve control unit 603, and an ignition control unit 604.

The information acquisition unit 601 acquires the information necessary for operation of the safety device 50 from the sensor unit 40. The information acquisition unit 601 acquires, for example, information indicating a state of own vehicle, such as a vehicle speed, a travel distance, an operating state of a brake, an operating state of a direction indicator, a steering state, a yaw rate, and the gravity (G), or information indicating a state around the own vehicle (vehicle 100), such as the presence of an oncoming vehicle or an obstacle.

The determination unit 602 determines whether the safety device 50 should be operated based on the information acquired by the information acquisition unit 601. Specifically, the determination unit 602 determines that the safety device 50 should be operated to inflate and deploy the airbag 1 when it is determined based on the information acquired by the information acquisition unit 601 that the vehicle 100 has collided or when the collision is expected to be unavoidable.

The valve control unit 603 controls opening and closing of the first valve B1. The details will be described below, while in a case where the determination unit 602 determines that the safety device 50 should be operated, the valve control unit 603 allows the first valve B1 to temporarily switch from the closed state to the opened state and thereby supplies an appropriate volume of hydrogen gas to the initiator 3.

The ignition control unit 604 controls the initiator 3. In a case where the determination unit 602 determines that the safety device 50 should be operated, the ignition control unit 604 transmits a control signal to the initiator 3. Specifically, the control signal is an ignition current for operating the ignition portion 31 of the initiator 3.

The storage unit 605 stores an operating system (OS), various programs, various data tables, various databases, setting data, user data, and the like for performing operation of the safety device 50.

### Airbag Inflation and Deployment Operation

Hereinafter, the inflation and deployment operation of the airbag 1 in the safety device 50 according to the first embodiment will be described with reference to FIG. 1. In the present example, the inflation and deployment operation of the airbag 1 in a case where the vehicle 100 during traveling cannot avoid a collision (more specifically, in a case where a collision is expected to be unavoidable) will be described.

During traveling of the vehicle 100, the first valve B1 is in the closed state in a state before the safety device 50 is operated (that is, in a state before the airbag 1 is inflated and deployed). Therefore, the hydrogen gas is not flowing through the first flow path 4, and no hydrogen gas is supplied to the initiator 3.

In a case where the determination unit 602 determines, based on the information acquired by the information acquisition unit 601 of the control device 60 from the sensor unit 40, that the safety device 50 should be operated, the valve control unit 603 first switches the first valve B1 from the closed state to the opened state.

When the first valve B1 is switched to the opened state, the flow of hydrogen gas in the first flow path 4 from the hydrogen tank 20 opens. As a result, the hydrogen gas flows through the first flow path 4 to be supplied to the initiator 3. Additionally, as described above, the hydrogen gas flows through the first flow path 4, and thus the check valve 62 of the introduction section 6 opens, and the air in the atmosphere flows into the first flow path 4. Consequently, oxygen gas contained in the air is introduced into the first flow path 4, and the oxygen gas is mixed with the hydrogen gas flowing through the first flow path 4. As a result, the mixed fluid of hydrogen gas and oxygen gas is supplied to the initiator 3 disposed downstream of the introduction section 6 in the first flow path 4.

The mixed fluid is ignited by the initiator 3, and thus water vapor for supply to the airbag 1 is generated; however, an appropriate volume of water vapor needs to be generated to appropriately inflate and deploy the airbag 1. In addition, to generate the appropriate volume of water vapor, an appropriate volume of hydrogen gas needs to be supplied to the initiator 3. Here, "appropriate inflation and deployment of the airbag" means that the airbag is inflated and deployed without bursting and to the extent that the airbag can exert cushioning properties. Therefore, "the appropriate volume (hereinafter, also referred to as a proper volume)" of hydrogen gas or oxygen gas means "the volume that can produce the volume of water vapor sufficient to exert cushioning properties without burst of the airbag". When the volume of hydrogen gas supplied to the initiator 3 is less than the proper volume, the volume of water vapor sufficient for the airbag 1 to exert cushioning properties cannot be produced, and when the volume of hydrogen gas supplied to the initiator 3 exceeds the proper volume, an excessive volume of water vapor is produced and thus burst of the airbag 1 is concerned. The proper volume of hydrogen gas can be determined to have a predetermined range.

As described above, since the hydrogen gas is filled into the hydrogen tank 20 in a pressurized state, the hydrogen gas continues to be supplied to the initiator 3 when the first valve B1 is in the opened state. Additionally, in the present embodiment, since the hydrogen tank 20 also serves as a hydrogen supply source to the hydrogen fuel engine 10 and a hydrogen supply source to the safety device 50, the volume of hydrogen gas exceeding the proper volume described above is filled into the hydrogen tank 20. Therefore, when the first valve B 1 switched from the closed state to the opened state remains in the opened state, an excessive volume of hydrogen gas is likely to be supplied to the initiator 3. When the initiator 3 is operated with the excessive volume of hydrogen gas supplied, an excessive volume of water vapor is generated, and there is a risk that airbag 1 cannot be appropriately inflated and deployed. Also, in a case where a collision is light and the vehicle 100 is not badly damaged, the vehicle 100 may be moved with own power to a repair plant or the like. Since the vehicle 100 according to the present embodiment uses hydrogen gas as a drive source, a certain volume of hydrogen gas needs to be left in the hydrogen tank 20 to move the vehicle 100 with own power after the safety device 50 is operated due to the collision. However, when the first valve B 1 remains in the opened state, the hydrogen gas in the hydrogen tank 20 is used up for operation of the safety device 50, and thus the vehicle 100 cannot be moved with own power after the safety device 50 is operated.

For such a problem, the safety device 50 according to the present embodiment temporarily switches the first valve B1 from the closed state to the opened state to supply the proper volume of hydrogen gas to the initiator 3 at the time of inflating and deploying the airbag 1. Specifically, the valve control unit 603 of the control device 60 switches the first valve B1 to the closed state after a predetermined period of time elapses since the first valve B1 is switched from the opened state to the closed state. Here, "the predetermined period of time" is a time defined in a manner that the proper volume of hydrogen gas is supplied from the hydrogen tank 20 to the initiator 3. The predetermined period of time can be defined in the range from, for example, 10 ms to 100 ms.

In addition, the ignition control unit 604 supplies an ignition current to the ignition portion 31 of the initiator 3 at a timing when the mixed fluid of hydrogen gas and oxygen gas flows through the first flow path 4, thereby allowing the initiator 3 to operate. At this time, the valve control unit 603 brings the first valve B1 into the closed state before the initiator 3 is operated, and thus ignition has no influence on hydrogen gas in the hydrogen tank 20. The ignition control unit 604 may allow the initiator 3 to operate, for example, after the first valve B1 is switched from the opened state to the closed state.

A proper volume of the mixed fluid of hydrogen gas and oxygen gas is ignited by the initiator 3, and thus a proper volume of water vapor is generated to be supplied to the airbag 1. As a result, the airbag 1 is appropriately inflated and deployed, and an occupant is protected against an impact of a collision. Moreover, the hydrogen gas can be left in the hydrogen tank 20 by using only the proper volume of hydrogen gas rather than using up the hydrogen gas filled in the hydrogen tank 20 in inflating and deploying the airbag 1. As a result, the hydrogen gas can be supplied from the hydrogen tank 20 to the hydrogen fuel engine 10 after the safety device 50 is operated, and the vehicle 100 can be driven.

### Method for Operating Safety Device

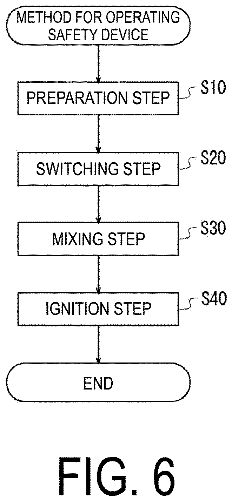

FIG. 6 is a diagram illustrating a method for operating the safety device 50 according to the first embodiment. As illustrated in FIG. 6, the method for operating the safety device 50 includes a preparation step (step S10), a switching step (step S20), a mixing step (step S30), and an ignition step (step S40).

In the preparation step, the safety device 50 including the airbag 1, the initiator 3, the first flow path 4, the first valve B1, the introduction section 6, and the water vapor flow path 5 is prepared. In the switching step, the first valve B1 is temporarily switched from the closed state where the flow of hydrogen gas from the hydrogen tank 20 is shut off to the opened state where the flow of hydrogen gas from the hydrogen tank 20 is opened to supply an appropriate volume of hydrogen gas to the initiator 3. Consequently, a predetermined volume of hydrogen gas is guided into the first flow path 4. In the mixing step, the oxygen gas supplied from the air as the oxygen supply source in the atmosphere is introduced into the first flow path 4 by the introduction section 6, thereby mixing the oxygen gas with the hydrogen gas flowing through the first flow path 4. Note that there may be a step of closing the first valve B1 after the mixing step and before the ignition step. In the ignition step, water vapor is generated by igniting the mixed fluid of hydrogen gas and oxygen gas by the initiator 3. As described above, the safety device 50 can be operated.

### Actions and Effects

As described above, the safety device 50 according to the first embodiment includes the airbag 1 supplied with water vapor to be inflated and deployed, the initiator 3 configured to ignite a mixed fluid of hydrogen gas and oxygen gas to generate water vapor for supplying to the airbag 1, the first flow path 4 configured to guide hydrogen gas to the initiator 3 from the hydrogen tank 20 filled with the volume of hydrogen gas in a pressurized state, the volume of the hydrogen gas in the pressurized state exceeding an appropriate volume for inflation and deployment of the airbag 1, the first valve B1 disposed in the first flow path 4 to be switchable between the closed state where the flow of hydrogen gas from the hydrogen tank 20 is shut off and the opened state where the flow of hydrogen gas from the hydrogen tank 20 is opened, the introduction section 6 disposed at a position downstream of the first valve B1 in the first flow path 4 and introducing oxygen gas into the first flow path 4 and thereby mixes the oxygen gas with the hydrogen gas flowing through the first flow path 4, and the water vapor flow path 5 configured to guide the water vapor generated by the first flow path 4 from the first flow path 4 to the airbag 1. Additionally, the first valve B1 is in the closed state before inflating and deploying the airbag 1, and at the time of inflating and deploying the airbag 1, the first valve B1 temporarily switches from the closed state to the opened state to supply an appropriate volume of hydrogen gas to the initiator 3.

According to such a safety device 50, the appropriate volume of hydrogen gas is extracted from the hydrogen tank 20 filled with the volume of hydrogen gas exceeding an appropriate volume of hydrogen gas for inflation and deployment of the airbag 1, and can be used for inflation and deployment of the airbag 1. As a result, the safety device 50 according to the first embodiment can appropriately inflate and deploy the airbag 1. Further, the safety device 50 according to the first embodiment can leave hydrogen gas in the hydrogen tank 20 without using up, in a single operation of the airbag 1, the hydrogen gas filled into the hydrogen tank 20. Therefore, for example, after the safety device 50 is operated, the vehicle can travel with own power for moving or repair. Furthermore, in a case where the collision is minor, the safety device 50 can be reused by changing only the necessary parts.

The safety device 50 according to the first embodiment is configured in a manner that at the time of inflating and deploying the airbag 1, the first valve B1 switches to the closed state after the predetermined period of time elapses since the first valve B 1 is brought into the opened state. Thus, the proper volume of hydrogen gas can be supplied to the initiator 3. However, the technique according to the present disclosure is not limited to such a configuration. The technique according to the present disclosure may measure the volume of hydrogen gas flowing through the first flow path 4, for example, not after the predetermine period of time, and switch the first opening and closing portion to the closed state since the first opening and closing portion is brought into the opened state and then the predetermined volume of hydrogen gas is supplied to the initiator 3.

Further, the safety device 50 according to the first embodiment is configured in a manner that the initiator 3 is operated at a timing when the mixed fluid of hydrogen gas and oxygen gas flows through the first flow path 4. Consequently, water vapor for supplying to the airbag 1 can be generated.

Furthermore, the safety device 50 according to the first embodiment is configured in a manner that the air in the atmosphere outside the first flow path 4 is utilized as the oxygen supply source and in a manner that the introduction section 6 allows the air to flow from the outside to the inside of the first flow path 4 and prevents the air from flowing out from the inside to the outside of the first flow path 4. As a result, the oxygen gas contained in the air can be introduced into the first flow path 4 and supplied to the initiator 3. Also, by utilizing the air in the atmosphere as the oxygen supply source, it is not necessary to separately prepare a container filled with oxygen gas, and thus the number of parts can be reduced.

Further, the introduction section 6 according to the first embodiment includes the communicating port 61 formed in the tube wall 2a that defines the first flow path 4 and allowing for communication between the inside and the outside of the first flow path 4, the check valve 62 disposed to open and close the communicating port 61, and the throttle portion 63 disposed on the tube wall 2a in a manner that the cross-sectional area of a portion in the first flow path 4 is smaller than the cross-sectional areas of front and rear portions of the portion. In addition, the introduction section 6 according to the first embodiment is configured in a manner that the check valve 62 opens due to a pressure drop occurring when hydrogen gas passes the portion of the first flow path 4 and air flows into the first flow path 4. The introduction section 6 according to the first embodiment introduces therein oxygen gas by using a pressure drop occurring when hydrogen gas flows through the first flow path 4, and thus can introduce therein the oxygen gas with a simple configuration as compared to a case where oxygen gas is introduced with the use of an electrically driven valve.

Furthermore, the safety device 50 according to the first embodiment is mounted in the vehicle 100 that uses, as a drive source, hydrogen gas filled in the hydrogen tank 20. The safety device 50 extracts and uses an appropriate volume of hydrogen gas from the hydrogen tank 20 filled with the volume of hydrogen gas exceeding an appropriate volume for inflation and deployment of the airbag 1. Therefore, the hydrogen gas can be left in the hydrogen tank 20. In other words, the hydrogen gas filled in the hydrogen tank 20 is not used up in inflating and deploying the airbag 1, and can be left for driving the vehicle 100. This allows the hydrogen gas to be supplied from the hydrogen tank 20 to the hydrogen fuel engine 10 even after the safety device 50 is operated, and the vehicle 100 can travel by own power. From such perspectives, the technique of the present disclosure may be applied to devices, which use hydrogen as a drive source, other than vehicles.

Here, L1 in FIG. 1 represents a flow path length from the first valve B1 to the introduction section 6 in the first flow path 4, and L2 in FIG. 1 represents a flow path length from the introduction section 6 to the initiator 3 in the first flow path 4. Note that the flow path length refers to a length of the flow path in the flow direction of gas. At this time, in the safety device 50 according to the first embodiment, the introduction section 6 is disposed in a manner that L1 > L2 is established. In other words, the introduction section 6 is disposed at a position downstream of the first valve B1 in the first flow path 4, and is located closer to the initiator 3 between the first valve B 1 and the initiator 3. Therefore, hydrogen gas and oxygen gas are mixed at a position close to the initiator 3. Accordingly, the timing when hydrogen gas and oxygen gas are mixed in the first flow path 4 is close to the timing of ignition by the initiator 3, and the period in which hydrogen gas and oxygen gas coexist in the first flow path 4 is short. As a result, even in a case where the mixed fluid of hydrogen gas and oxygen gas is ignited at an unexpected timing due to malfunction of the initiator 3, the influence can be reduced. Also, the first valve B1 is disposed adjacent to the hydrogen tank 20 (for example, at the inflow port 41 or the discharge port 201), and thus hydrogen gas is prevented from remaining in the first tube 2. From the perspectives described above, the introduction section 6 is preferably disposed at a position closer to the initiator 3, and the timing when hydrogen gas and oxygen gas are mixed is preferably immediately before ignition by the initiator 3.

### Modified Example

Hereinafter, a modified example of the first embodiment will be described. In the description of the modified example, differences from the modes described in FIGS. 1 to 6 will be mainly described, and detailed descriptions about similar points will be omitted.

### First Modified Example

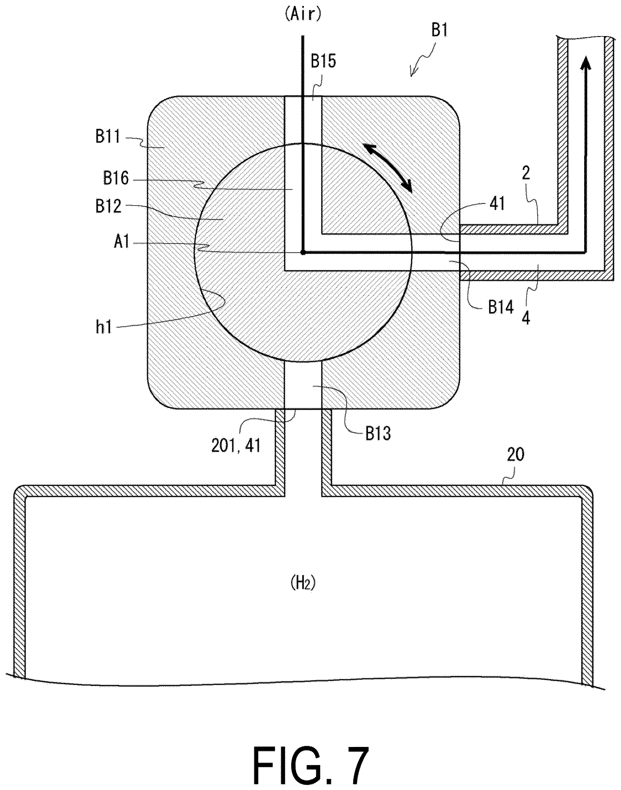

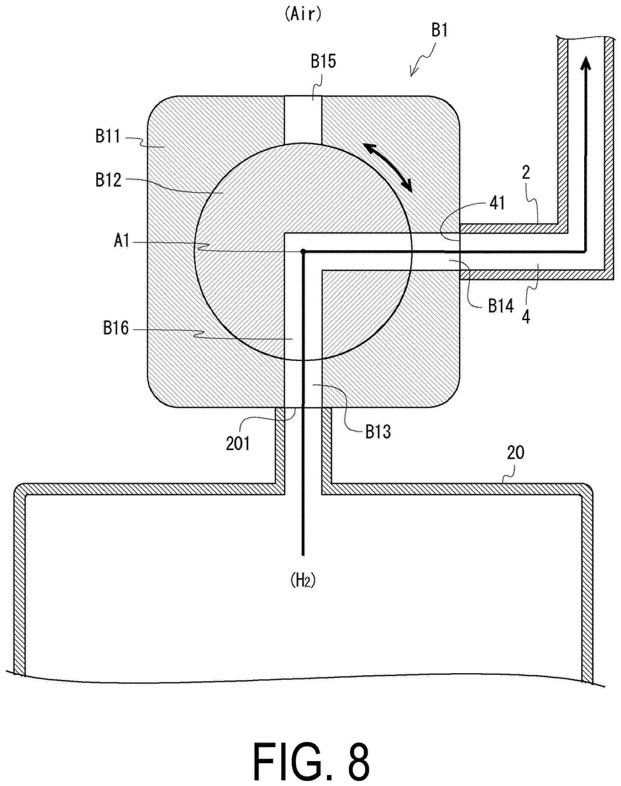

FIG. 7 is a diagram for describing a closed state of the first valve B1 according to a first modified example of the first embodiment. FIG. 8 is a diagram for describing an opened state of the first valve B1 according to the first modified example of the first embodiment. In FIGS. 7 and 8, a cross-section orthogonal to a rotation axis indicated by reference sign A1 is illustrated. As illustrated in FIGS. 7 and 8, the first valve B1 according to the first modified example is disposed at the inflow port 41 of hydrogen gas in the first flow path 4. The first valve B1 according to the first modified example includes a casing B11 and a rotor B 12, and the rotor B 12 is configured as a rotary valve that rotates around the rotation axis A1 in the casing B11 to switch between the closed state and the opened state.

As illustrated in FIGS. 7 and 8, the casing B 11 is a cylindrical member extending along the rotation axis A1, and forms a sleeve hole h1 that houses the rotor B 12 rotatably. Additionally, a first communicating path B 13, a second communicating path B 14, and a third communicating path B15 through which fluid can flow are formed in the casing B11. The first communicating path B13, the second communicating path B14, and the third communicating path B15 extend through an inner circumferential surface (surface defining the sleeve hole h1) to an outer peripheral surface of the casing B11, and are disposed separated from each other around the rotation axis A1. Specifically, the first communicating path B13 and the second communicating path B14 are in a positional relationship that is 90° apart from each other around the rotation axis A1, and the first communicating path B13 and the third communicating path B15 are in a positional relationship that is 180° apart from each other. However, the positional relationship between the communicating paths is not limited to such relationships in the technique disclosed herein. As illustrated in FIGS. 7 and 8, the first communicating path B13 is connected to the discharge port 201 of the hydrogen tank 20 to communicate with the hydrogen tank 20. The second communicating path B14 is connected to the inflow port 41 of the first flow path 4 to communicate with the first flow path 4. The third communicating path B15 communicates with the air (outside air) outside the first flow path 4.

The rotor B12 is a cylindrical member extending along the rotation axis A1, and is configured to be rotatable around the rotation axis A1 in the sleeve hole h1 in accordance with the control of the valve control unit 603 of the control device 60. For example, a solenoid or a motor is used to control the rotation of the rotor B12. A fourth communicating path B16 that extends bent in an L-shape is formed in the rotor B12. The fourth communicating path B16 is opened to two locations on an outer circumferential surface of the rotor B12, and the two openings are disposed at 90° apart about the rotation axis A1.

As illustrated in FIG. 7, in the closed state, the first communicating path B13 and the second communicating path B14 are separated (in a non-communicating state) by the rotor B12, thereby blocking the flow of hydrogen gas from the hydrogen tank 20. Also, in the closed state, the second communicating path B14 and the third communicating path B15 communicate with each other via the fourth communicating path B16, and thus the first flow path 4 communicates with the outside air. As a result, as illustrated in FIG. 7, the air outside the first flow path 4 can flow through the third communicating path B15, the fourth communicating path B16, and the second communicating path B14 into the first flow path 4. As illustrated in FIG. 8, in the opened state, the first communicating path B13 and the second communicating path B14 communicate with each other via the fourth communicating path B16, thereby opening the flow of hydrogen gas from the hydrogen tank 20. Meanwhile, in the opened state, the second communicating path B14 and the third communicating path B15 are separated by the rotor B12, and thus the flow of air from the outside is shut off.

As described above, the first valve B1 according to the first modified example is disposed at the inflow port 41 of hydrogen gas in the first flow path 4. The first valve B 1 in the closed state is configured to allow the air from the outside of the first flow path 4 to flow into the first flow path 4.

In a case where the first valve B 1 is disposed at a position separated from the inflow port 41 (hydrogen tank 20) in the first flow path 4, the hydrogen gas is considered to remain in a region on the upstream side of the first valve B1 in the first flow path 4 (the region from the inflow port 41 to the first valve B1) when the first valve B1 is in the closed state. However, in the first modified example, the first valve B 1 is disposed at the inflow port 41 of the first flow path 4 (near the hydrogen tank 20), and thus such remaining of the hydrogen gas can be avoided. Additionally, in the first modified example, even after the first valve B1 is brought into the closed state (FIG. 7) from the opened state (FIG. 8), hydrogen gas or oxygen gas in the first flow path 4 smoothly flows toward the initiator 3. This is because the first flow path 4 is in communication with the outside via the first valve B 1 in the closed state. According to such first modified example, hydrogen gas can be suppressed from remaining in the first tube 2 (the first flow path 4 and the water vapor flow path 5). As a result, for example, even in a case where the initiator 3 malfunctions after the safety device 50 is operated, ignition of the hydrogen gas can be avoided.

### Second Modified Example

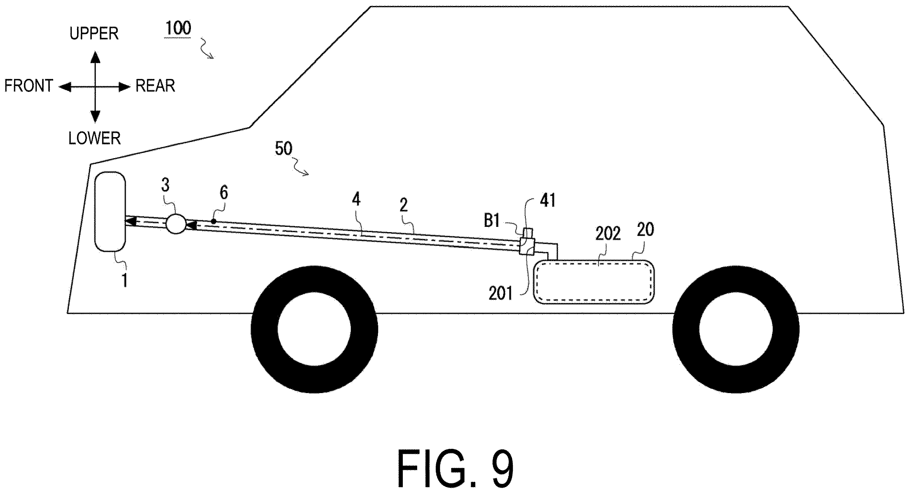

FIG. 9 is a diagram for describing the safety device 50 according to a second modified example of the first embodiment. In FIG. 9, the front-rear direction (length direction) and the up-down direction (height direction) of the vehicle are indicated by arrows. Reference numeral 202 in FIG. 9 indicates an accommodating space in which hydrogen gas is contained in the hydrogen tank 20. As illustrated in FIG. 9, the first valve B1 according to the second modified example is disposed at the inflow port 41 of the first flow path 4. Further, the first flow path 4 according to the second modified example is disposed to be inclined in a manner that the position is elevated from the upstream toward the downstream. Furthermore, in the second modified example, the inflow port 41 of the first flow path 4 is disposed at a position higher than an upper end portion of the accommodating space 202 of the hydrogen tank 20.

Also, in the second modified example, since the first valve B1 is disposed at the inflow port 41 of the first flow path 4, hydrogen gas can be prevented from remaining in the region on the upstream side of the first valve B 1 in the first flow path 4. Additionally, in the second modified example, the first flow path 4 is disposed in a manner that the position is elevated from the upstream toward the downstream. Since hydrogen gas is lighter than air, the hydrogen gas remaining in the first flow path 4 and the water vapor flow path 5 flows toward the downstream side after the safety device 50 is operated, thereafter being discharged into the airbag 1. Also, according to such a second modified example, hydrogen gas can be suppressed from remaining in the first tube 2 (the first flow path 4 and the water vapor flow path 5). Moreover, the first valve B1 according to the first modified example described above is applied in the safety device 50 according to the second modified example, and the outside air is taken into the first flow path 4 via the first valve B 1 in the closed state. Thus, the hydrogen gas remaining in the first flow path 4 can be more easily discharged (easily supplied toward the initiator 3).

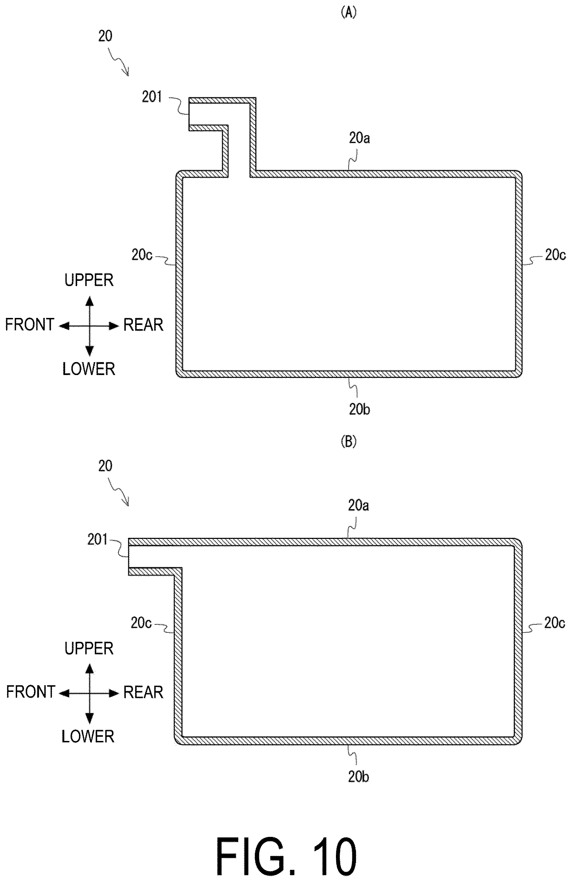

FIG. 10 is a diagram for describing an example of a positional relationship between the discharge port 201 of the hydrogen tank 20 and the accommodating space 202. As illustrated in FIGS. 10(A) and 10(B), the hydrogen tank 20 includes, as an example, a top surface portion 20a that defines the upper end portion of the accommodating space 202, a bottom surface portion 20b that defines a lower end portion, and side surface portions 20c that connect the top surface portion 20a and the bottom surface portion 20b, and thus is formed in a substantially rectangular box shape. The discharge port 201 of the hydrogen tank 20 may be disposed at the level equal to or higher than the upper end portion of the accommodating space 202 as illustrated in FIG. 10(A), or may be disposed at the level equal to the upper end portion of the accommodating space 202 as illustrated in FIG. 10(B). Therefore, the inflow port 41 of the first flow path 4 is disposed at the level equal to or higher than the upper end portion of the accommodating space 202. As a result, the residual volume of hydrogen gas filled in the hydrogen tank 20 is reduced, and the hydrogen gas lighter than the air is unevenly present at the upper portion of the accommodating space 202. Even in such a case, the hydrogen gas can flow from the hydrogen tank 20 to the first flow path 4.

### Second Embodiment

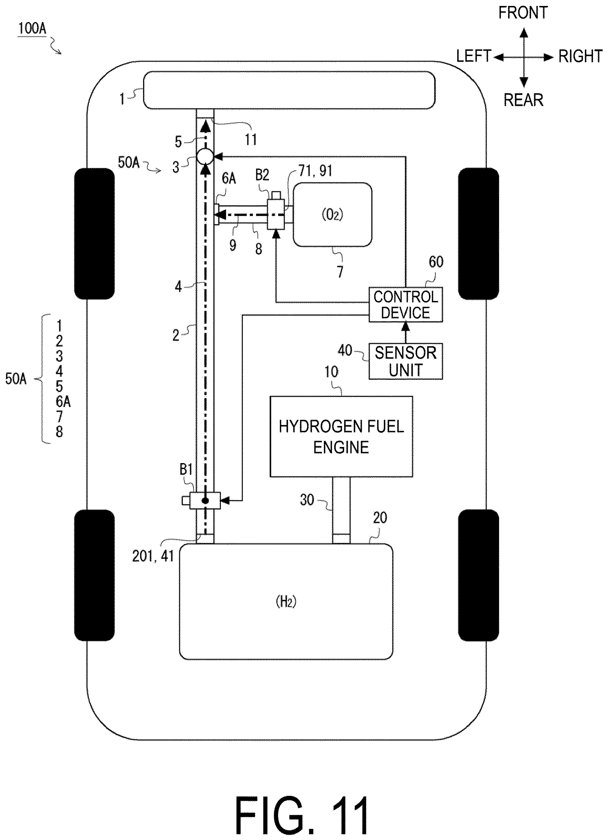

A safety device 50A according to a second embodiment of the present disclosure will be described below. In the description of the second embodiment, differences from the safety device 50 according to the first embodiment described in FIGS. 1 to 10 will be mainly described, and detailed descriptions about similar points will be omitted. FIG. 11 is a schematic configuration diagram schematically illustrating a vehicle 100A including the safety device 50A according to the second embodiment. As illustrated in FIG. 11, the safety device 50A according to the second embodiment is mainly different from the safety device 50 according to the first embodiment in that the safety device 50A includes an oxygen tank 7, a second tube 8, a second flow path 9, and a second valve B2.

The oxygen tank 7 is a container that is filled with oxygen gas in a pressurized state. In the safety device 50A according to the second embodiment, it is sufficient that only an appropriate volume of oxygen gas for inflation and deployment of the airbag 1 is filled into the oxygen tank 7. Therefore, the oxygen tank 7 is filled with the appropriate volume of oxygen gas for inflation and deployment of the airbag 1. As a result, the size of the oxygen tank 7 can be reduced. In the second embodiment, the oxygen tank 7 corresponds to an example of "a second container" as "the oxygen supply source" according to the present disclosure. Note that in the technique according to the present disclosure, the state of oxygen contained in the second container is not limited to gas. In the technique according to the present disclosure, oxygen in liquid form may be filled into the second container.

An introduction section 6A according to the second embodiment does not utilize the Venturi effect as in the introduction section 6 according to the first embodiment, and is formed as an opening disposed in the middle of the first tube 2. The introduction section 6A is disposed between the first valve B1 and the initiator 3 in the first flow path 4, and is disposed at a position downstream of the first valve B1.

The second tube 8 is a tube through which gas can flow. By connecting a discharge port indicated by reference numeral 71 of the oxygen tank 7 to the introduction section 6A, the oxygen tank 7 and the first flow path 4 are brought into communication with each other. An internal space of the second tube 8 forms the second flow path 9 that guides oxygen gas from the oxygen tank 7 to the introduction section 6A.

As illustrated in FIG. 11, the second valve B2 is disposed at an oxygen gas inflow port 91 in the second flow path 9. The second valve B2 is configured to shut off the second flow path 9 before inflating and deploying the airbag 1 and to open the second flow path 9 at the time of inflating and deploying the airbag 1. The second valve B2 corresponds to an example of "a second opening and closing portion" according to the present disclosure.

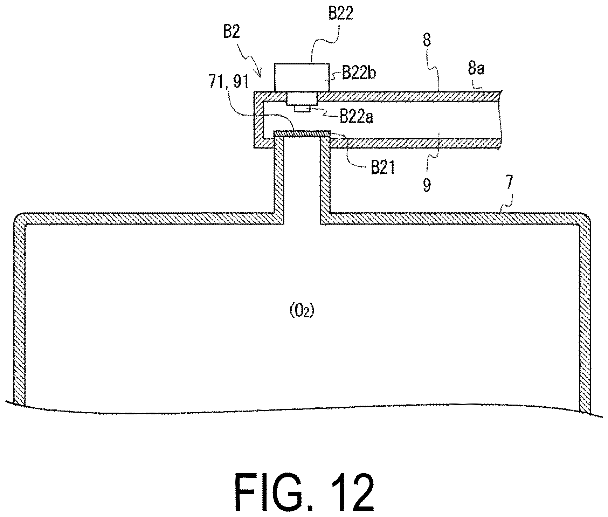

FIG. 12 is a diagram for describing the second valve B2 according to the second embodiment. In FIG. 12, a cross-section near the second valve B2 of the safety device 50A is illustrated. As illustrated in FIG. 12, the second valve B2 includes a metal rupture disk B21 disposed to close the discharge port 71 of the oxygen tank 7, and an initiator B22 disposed opposed to the rupture disk B21. The second valve B2 is configured as a pyro-type valve that operates the initiator B22 in accordance with the control of the control device 60 and opens the second flow path 9. The initiator B22 includes an ignition portion B22a and a connector portion B22b, and the ignition portion B22a is fixed to a tube wall 8a of the second tube 8 to be located opposed to the rupture disk B21 in the second tube 8 (the second flow path 9). Known ignition powder is contained in the ignition portion B22a. The ignition portion B22a is supplied via the connector portion B22b with an ignition current from the control device 60 and thereby is operated, and burns the ignition powder contained therein and thereby discharges combustion products including flames and hot gas toward the rupture disk B21. As a result, the rupture disk B21 is split open, and the second flow path 9 is opened.

In a case where the safety device 50A is operated in the second embodiment, the valve control unit 603 switches the first valve B1 from the closed state to the opened state and operates the initiator B22 of the second valve B2. Accordingly, the first flow path 4 and the second flow path 9 are opened. As a result, the oxygen gas supplied from the oxygen tank 7 is introduced via the introduction section 6A into the first flow path 4, and the hydrogen gas flowing through the first flow path 4 and the oxygen gas are mixed.

According to the safety device 50A according to the second embodiment, the same effects as those of the first embodiment can be obtained. In other words, an appropriate volume of hydrogen gas can be extracted from the hydrogen tank 20 filled with the volume of hydrogen gas exceeding an appropriate volume for inflation and deployment of the airbag 1, and be used in inflating and deploying the airbag 1. As a result, the airbag 1 can be appropriately inflated and deployed also by the safety device 50A according to the second embodiment.

Additionally, in the safety device 50A according to the second embodiment, since the volume of oxygen gas filled into the oxygen tank 7 is the appropriate volume for inflation and deployment of the airbag 1, there is no problem even when the oxygen gas of the oxygen tank 7 is used up in operation of the safety device 50A. Accordingly, as long as the second valve B2 can switch the second flow path 9 from the closed state to the opened state, the second valve B2 need not switch the second flow path 9 from the opened state to the closed state. Therefore, the safety device 50A according to the second embodiment can employ a pyro-type valve such as the second valve B2 that opens the flow path by using the initiator. The second valve B2 configured as a pyro-type valve can be operated only by an electric current for igniting the powder contained in the initiator B22, therefore being operable with small power compared to a solenoid valve. Note that the second valve B2 configured as a pyro-type valve may be a valve, for example, as described in US 5,622,381 or US 6,131,948, which uses an initiator including a projectile that flies during operation and open a rupture disk by flying of the flying body, or may be a valve, for example, as described in JP 2021-079918 A, which opens a flow path by operating an initiator to move a piston.

Note that the second opening and closing portion according to the present disclosure is not limited to the mode described above. For example, the second valve B2 may be a gate valve that is electrically driven in accordance with the control of the control device 60. Also, a location at which the second opening and closing portion is disposed is not limited to the inflow port of the second flow path, and the second opening and closing portion may be disposed at any location in the second flow path.

### <Others>

Suitable embodiments according to the present disclosure have been described above, but each embodiment disclosed in the present specification can be combined with each of the features disclosed in the present specification.

### Reference Signs List

1 Airbag
3 Initiator (example of ignition portion)
4 First flow path
5 Water vapor flow path
6 Introduction section
7 Oxygen tank (example of second container)
9 Second flow path
20 Hydrogen tank (example of first container)
50 Safety device
100 Vehicle
B1 First valve (example of first opening and closing portion)
B2 Second valve (example of second opening and closing portion)

## Claims

1. A safety device (50, 50A), comprising:
an airbag (1) supplied with water vapor to be inflated and deployed;
an ignition portion (3) configured to ignite a mixed fluid of hydrogen and oxygen to generate water vapor to be supplied to the airbag (1); and
a first flow path (4) configured to guide hydrogen to the ignition portion (3) from a first container (20) filled with a volume of hydrogen in a pressurized state, the volume of the hydrogen in the first container (20) exceeding an appropriate volume for inflation and deployment of the airbag (1),
**characterized by** further comprising:
a first opening and closing portion (B1) disposed in the first flow path (4) and switchable between a closed state where a flow of hydrogen from the first container (20) is shut off and an opened state where the flow of hydrogen from the first container (20) is opened;
an introduction section (6, 6A) disposed at a position downstream of the first opening and closing portion (B1) in the first flow path (4), the introduction section (6, 6A) introducing oxygen supplied from an oxygen supply source into the first flow path (4) and thereby mixes the oxygen with the hydrogen flowing through the first flow path (4); and
a water vapor flow path (5) configured to guide the water vapor generated by the ignition portion (3) from the ignition portion (3) to the airbag (1), wherein
before inflating and deploying the airbag (1), the first opening and closing portion (B1) is in the closed state, and
at the time of inflating and deploying the airbag (1), the first opening and closing portion (B1) is temporarily switched from the closed state to the opened state to supply the appropriate volume of hydrogen to the ignition portion (3).

2. The safety device according to claim 1, wherein
at the time of inflating and deploying the airbag (1), the first opening and closing portion (B1) is switched to the closed state after a predetermined period of time elapses since the first opening and closing portion (B1) is shifted to the opened state.

3. The safety device (50, 50A) according to claim 1 or 2, wherein
at the time of inflating and deploying the airbag (1), the ignition portion (3) operates at a timing when the mixed fluid flows through the first flow path (4).

4. The safety device (50) according to any one of claims 1 to 3, wherein
the oxygen supply source is air in the atmosphere outside the first flow path (4), and
the introduction section (6) is configured to allow the air to flow into the first flow path (4) from the outside of the first flow path (4) and to prevent the fluid from flowing out from the inside of the first flow path (4) to the outside of the first flow path (4).

5. The safety device (50) according to claim 4, wherein
the introduction section (6) includes
a communicating port (61) formed in a tube wall (2a) that defines the first flow path (4) and allowing for communication between the inside and the outside of the first flow path (4),
a check valve (62) disposed to open and close the communicating port (61),
a throttle portion (63) disposed on the tube wall (2a) in a manner that a portion having a cross-sectional area is smaller than cross-sectional areas of front and rear portions of the portion in the first flow path (4), and
the check valve (62) is opened due to a pressure drop occurring when the hydrogen passes through the portion of the first flow path (4), and the air flows into the first flow path (4).

6. The safety device (50A) according to any one of claims 1 to 3, further comprising:
a second container (7) as the oxygen supply source filled with oxygen;
a second flow path (9) configured to guide the oxygen from the second container (7) to the introduction section (6A); and
a second opening and closing portion (B2) disposed in the second flow path (9), wherein
before inflating and deploying the airbag (1), the second opening and closing portion (B2) shuts off the second flow path (9), and
at the time of inflating and deploying the airbag (1), the second opening and closing portion (B2) opens the second flow path (9).

7. The safety device (50, 50A) according to any one of claims 1 to 6, wherein
the introduction section (6, 6A) is disposed at a position downstream of the first opening and closing portion (B1) in the first flow path (4), and is disposed at a position in a manner that a flow path length (L2) from the introduction section (6, 6A) to the ignition portion (3) is shorter than a flow path length (L1) from the first opening and closing portion (B1) to the introduction section (6, 6A).

8. The safety device (50, 50A) according to any one of claims 1 to 7, wherein
the first opening and closing portion (B1) is disposed at an inflow port (41) of hydrogen in the first flow path (4).

9. The safety device (50, 50A) according to claim 8, wherein
in the closed state, the first opening and closing portion (B1) allows for communication of the inside of the first flow path (4) with the atmosphere outside the first flow path (4) and thereby allows the air to flow into the first flow path (4) from the outside of the first flow path (4).

10. The safety device (50, 50A) according to claim 8 or 9, wherein
the first flow path (4) is disposed with a position elevated from an upstream side toward a downstream side.

11. The safety device (50, 50A) according to any one of claims 1 to 10, wherein
an inflow port (41) of hydrogen in the first flow path (4) is disposed on the level equal to or higher than an upper end portion of an accommodating space (202) of the first container (20).

12. The safety device (50, 50A) according to any one of claims 1 to 11, wherein
the safety device (50, 50A) is mounted in a vehicle (100, 100A), and
the vehicle (100, 100A) uses the hydrogen filled in the first container (20) as a drive source.

13. A method for operating a safety device (50, 50A), comprising:
preparing a safety device (50, 50A) including
an airbag (1) supplied with water vapor to be inflated and deployed,
an ignition portion (3) configured to ignite a mixed fluid of hydrogen and oxygen to generate water vapor to be supplied to the airbag (1), and
a first flow path (4) configured to guide hydrogen to the ignition portion (3) from a first container (20) filled with a volume of hydrogen in a pressurized state, the volume of the hydrogen in the first container (20) exceeding an appropriate volume for inflation and deployment of the airbag (1),
**characterized by**
preparing the safety device (50, 50A) further including
a first opening and closing portion (B1) disposed in the first flow path (4),
an introduction section (6, 6A) disposed at a position downstream of the first opening and closing portion (B1) in the first flow path (4), and
a water vapor flow path (5) configured to guide the water vapor generated by the ignition portion (3) from the ignition portion (3) to the airbag (1);
temporarily switching the first opening and closing portion (B1) from a closed state where a flow of hydrogen from the first container (20) is shut off to an opened state where the flow of hydrogen from the first container (20) is opened, to supply the appropriate volume of hydrogen to the ignition portion (3);
mixing oxygen with the hydrogen flowing through the first flow path (4) by introducing, via the introduction section (6, 6A) into the first flow path (4), the oxygen supplied from an oxygen supply source; and
igniting a mixed fluid of hydrogen and oxygen by the ignition portion (3) to generate water vapor.

## Patentansprüche

1. Sicherheitsvorrichtung (50, 50A), umfassend:
einen Airbag (1), der mit Wasserdampf versorgt wird, um aufgeblasen und entfaltet zu werden;
einen Zündabschnitt (3), der zum Zünden eines gemischten Fluids aus Wasserstoff und Sauerstoff konfiguriert ist, um Wasserdampf zu erzeugen, der dem Airbag (1) zugeführt wird; und
einen ersten Strömungsweg (4), der dazu konfiguriert ist, Wasserstoff von einem ersten Behälter (20), der mit einem Volumen an Wasserstoff in einem unter Druck stehenden Zustand gefüllt ist, zum Zündabschnitt (3) zu führen, wobei das Volumen des Wasserstoffs im ersten Behälter (20) ein geeignetes Volumen für das Aufblasen und Entfalten des Airbags (1) überschreitet,
**gekennzeichnet durch** ferner umfassend:
einen ersten Öffnungs- und Schließabschnitt (B1), der im ersten Strömungsweg (4) angeordnet und zwischen einem geschlossenen Zustand, in dem ein Strömungsfluss von Wasserstoff aus dem ersten Behälter (20) abgesperrt ist, und einem geöffneten Zustand, in dem der Strömungsfluss von Wasserstoff aus dem ersten Behälter (20) geöffnet ist, umschaltbar ist;
einen Einführungsabschnitt (6, 6A), der an einer Position stromabwärts des ersten Öffnungs- und Schließabschnitts (B1) im ersten Strömungsweg (4) angeordnet ist, wobei der Einführungsabschnitt (6, 6A) Sauerstoff aus einer Sauerstoffquelle in den ersten Strömungsweg (4) einführt und dadurch den Sauerstoff mit dem durch den ersten Strömungsweg (4) fließenden Wasserstoff vermischt; und
einen Wasserdampfströmungsweg (5), der dazu konfiguriert ist, den durch den Zündabschnitt (3) erzeugten Wasserdampf vom Zündabschnitt (3) zum Airbag (1) zu führen, wobei
vor dem Aufblasen und Entfalten des Airbags (1) der erste Öffnungs- und Schließabschnitt (B1) im geschlossenen Zustand ist und
zum Zeitpunkt des Aufblasens und Entfaltens des Airbags (1) der erste Öffnungs- und Schließabschnitt (B1) vorübergehend vom geschlossenen Zustand in den geöffneten Zustand umgeschaltet wird, um das geeignete Volumen an Wasserstoff zum Zündabschnitt (3) zuzuführen.

2. Sicherheitsvorrichtung nach Anspruch 1, wobei
zum Zeitpunkt des Aufblasens und Entfaltens des Airbags (1) der erste Öffnungs- und Schließabschnitt (B1) in den geschlossenen Zustand umgeschaltet wird, nachdem eine vorbestimmte Zeitspanne verstrichen ist, seit der erste Öffnungs- und Schließabschnitt (B1) in den geöffneten Zustand geschaltet wurde.

3. Sicherheitsvorrichtung (50, 50A) nach Anspruch 1 oder 2, wobei
zum Zeitpunkt des Aufblasens und Entfaltens des Airbags (1) der Zündabschnitt (3) zu einem Zeitpunkt arbeitet, wenn das gemischte Fluid durch den ersten Strömungsweg (4) fließt.

4. Sicherheitsvorrichtung (50) nach einem der Ansprüche 1 bis 3, wobei
die Sauerstoffquelle Luft in der Atmosphäre außerhalb des ersten Strömungswegs (4) ist und
der Einführungsabschnitt (6) dazu konfiguriert ist, dass die Luft von außerhalb des ersten Strömungswegs (4) in den ersten Strömungsweg (4) einströmen kann und das Fluid daran hindert, von innerhalb des ersten Strömungswegs (4) nach außen aus dem ersten Strömungsweg (4) zu fließen.

5. Sicherheitsvorrichtung (50) nach Anspruch 4, wobei
der Einführungsabschnitt (6) umfasst:
eine Kommunikationsöffnung (61), die in einer Rohrwand (2a) gebildet ist, die den ersten Strömungsweg (4) definiert und eine Kommunikation zwischen dem Inneren und dem Äußeren des ersten Strömungswegs (4) ermöglicht;
ein Rückschlagventil (62), das so angeordnet ist, dass es die Kommunikationsöffnung (61) öffnet und schließt;
einen Drosselabschnitt (63), der an der Rohrwand (2a) so angeordnet ist, dass ein Bereich mit einer Querschnittsfläche kleiner ist als die Querschnittsflächen der vorderen und hinteren Bereiche des Bereichs im ersten Strömungsweg (4), und
sich das Rückschlagventil (62) aufgrund eines Druckabfalls öffnet, der auftritt, wenn der Wasserstoff durch den Bereich des ersten Strömungswegs (4) strömt, und die Luft strömt in den ersten Strömungsweg (4).

6. Sicherheitsvorrichtung (50A) nach einem der Ansprüche 1 bis 3, ferner umfassend:
einen zweiten Behälter (7) als Sauerstoffquelle, der mit Sauerstoff gefüllt ist;
einen zweiten Strömungsweg (9), der dazu konfiguriert ist, den Sauerstoff vom zweiten Behälter (7) zum Einführungsabschnitt (6A) zu führen; und
einen zweiten Öffnungs- und Schließabschnitt (B2), der im zweiten Strömungsweg (9) angeordnet ist, wobei
vor dem Aufblasen und Entfalten des Airbags (1) der zweite Öffnungs- und Schließabschnitt (B2) den zweiten Strömungsweg (9) absperrt und
zum Zeitpunkt des Aufblasens und Entfaltens des Airbags (1) der zweite Öffnungs- und Schließabschnitt (B2) den zweiten Strömungsweg (9) öffnet.

7. Sicherheitsvorrichtung (50, 50A) nach einem der Ansprüche 1 bis 6, wobei
der Einführungsabschnitt (6, 6A) an einer Position stromabwärts des ersten Öffnungs- und Schließabschnitts (B1) im ersten Strömungsweg (4) angeordnet ist und an einer Position so angeordnet ist, dass die Länge des Strömungswegs (L2) vom Einführungsabschnitt (6, 6A) zum Zündabschnitt (3) kürzer ist als die Länge des Strömungswegs (L1) vom ersten Öffnungs- und Schließabschnitt (B1) zum Einführungsabschnitt (6, 6A).

8. Sicherheitsvorrichtung (50, 50A) nach einem der Ansprüche 1 bis 7, wobei
der erste Öffnungs- und Schließabschnitt (B1) an einem Einlass (41) von Wasserstoff im ersten Strömungsweg (4) angeordnet ist.

9. Sicherheitsvorrichtung (50, 50A) nach Anspruch 8, wobei
im geschlossenen Zustand der erste Öffnungs- und Schließabschnitt (B1) die Kommunikation des Inneren des ersten Strömungswegs (4) mit der Atmosphäre außerhalb des ersten Strömungswegs (4) ermöglicht und dadurch die Luft in den ersten Strömungsweg (4) von außerhalb des ersten Strömungswegs (4) einströmen kann.

10. Sicherheitsvorrichtung (50, 50A) nach Anspruch 8 oder 9, wobei
der erste Strömungsweg (4) so angeordnet ist, dass er von einer stromaufwärtigen Seite zu einer stromabwärtigen Seite erhöht ist.

11. Sicherheitsvorrichtung (50, 50A) nach einem der Ansprüche 1 bis 10, wobei
ein Einlass (41) von Wasserstoff im ersten Strömungsweg (4) auf der Höhe gleich oder höher als ein oberes Endstück eines Aufnahmeraums (202) des ersten Behälters (20) angeordnet ist.

12. Sicherheitsvorrichtung (50, 50A) nach einem der Ansprüche 1 bis 11, wobei
die Sicherheitsvorrichtung (50, 50A) in ein Fahrzeug (100, 100A) eingebaut ist und
das Fahrzeug (100, 100A) den im ersten Behälter (20) gefüllten Wasserstoff als Antriebsquelle verwendet.

13. Verfahren zum Betreiben einer Sicherheitsvorrichtung (50, 50A), umfassend:
Vorbereiten einer Sicherheitsvorrichtung (50, 50A), die
einen Airbag (1), der mit Wasserdampf versorgt wird, um aufgeblasen und entfaltet zu werden,
einen Zündabschnitt (3), der zum Zünden eines gemischten Fluids aus Wasserstoff und Sauerstoff konfiguriert ist, um Wasserdampf zu erzeugen, der dem Airbag (1) zugeführt wird, und
einen ersten Strömungsweg (4), der dazu konfiguriert ist, Wasserstoff von einem ersten Behälter (20), der mit einem Volumen an Wasserstoff in einem unter Druck stehenden Zustand gefüllt ist, zum Zündabschnitt (3) zu führen, wobei das Volumen des Wasserstoffs im ersten Behälter (20) ein geeignetes Volumen für das Aufblasen und Entfalten des Airbags (1) überschreitet, umfasst;
**gekennzeichnet durch:**
Vorbereiten der Sicherheitsvorrichtung (50, 50A), die ferner umfasst:
einen ersten Öffnungs- und Schließabschnitt (B1) im ersten Strömungsweg (4);
einen Einführungsabschnitt (6, 6A), der an einer Position stromabwärts des ersten Öffnungs- und Schließabschnitts (B1) im ersten Strömungsweg (4) angeordnet ist; und einen Wasserdampfströmungsweg (5), der dazu konfiguriert ist, den durch den Zündabschnitt (3) erzeugten Wasserdampf vom Zündabschnitt (3) zum Airbag (1) zu führen;
vorübergehendes Umschalten des ersten Öffnungs- und Schließabschnitts (B1) von einem geschlossenen Zustand, in dem ein Strömungsfluss von Wasserstoff aus dem ersten Behälter (20) abgesperrt ist, in einen geöffneten Zustand, in dem der Strömungsfluss von Wasserstoff aus dem ersten Behälter (20) geöffnet ist, um das geeignete Volumen an Wasserstoff zum Zündabschnitt (3) zuzuführen;
Mischen von Sauerstoff mit dem durch den ersten Strömungsweg (4) fließenden Wasserstoff durch Einführen des Sauerstoffs aus einer Sauerstoffquelle über den Einführungsabschnitt (6, 6A) in den ersten Strömungsweg (4); und
Zünden eines gemischten Fluids aus Wasserstoff und Sauerstoff durch den Zündabschnitt (3), um Wasserdampf zu erzeugen.

## Revendications

1. Dispositif de sécurité (50, 50A), comprenant :
un coussin gonflable (1) alimenté avec de la vapeur d'eau pour le gonfler et le déployer ;
une portion d'allumage (3) configurée pour enflammer un fluide mixte constitué d'hydrogène et d'oxygène afin de générer de la vapeur d'eau à fournir au coussin gonflable (1) ; et
un premier chemin d'écoulement (4) configuré pour guider de l'hydrogène vers la portion d'allumage (3) depuis un premier réservoir (20) rempli d'un volume d'hydrogène dans un état pressurisé, le volume d'hydrogène dans le premier réservoir (20) dépassant un volume approprié pour le gonflage et le déploiement du coussin gonflable (1),
**caractérisé en ce qu'**il comprend en outre :
une première portion d'ouverture et de fermeture (B1) disposée dans le premier chemin d'écoulement (4) et commutable entre un état fermé, où un flux d'hydrogène provenant du premier réservoir (20) est interrompu, et un état ouvert, où le flux d'hydrogène provenant du premier réservoir (20) est établi ;
une section d'introduction (6, 6A) disposée à une position en aval de la première portion d'ouverture et de fermeture (B1) dans le premier chemin d'écoulement (4), la section d'introduction (6, 6A) introduisant de l'oxygène fourni par une source d'alimentation en oxygène dans le premier chemin d'écoulement (4) et mélange ainsi l'oxygène avec l'hydrogène circulant dans le premier chemin d'écoulement (4) ; et
un chemin d'écoulement de vapeur d'eau (5) configuré pour guider la vapeur d'eau générée par la portion d'allumage (3) depuis la portion d'allumage (3) jusqu'au coussin gonflable (1), dans lequel
avant de gonfler et de déployer le coussin gonflable (1), la première portion d'ouverture et de fermeture (B1) est dans l'état fermé, et
au moment du gonflage et du déploiement du coussin gonflable (1), la première portion d'ouverture et de fermeture (B1) est commutée temporairement de l'état fermé à l'état ouvert pour fournir le volume approprié d'hydrogène à la portion d'allumage (3).

2. Dispositif de sécurité selon la revendication 1, dans lequel
au moment du gonflage et du déploiement du coussin gonflable (1), la première portion d'ouverture et de fermeture (B1) est commutée à l'état fermé après qu'une période prédéterminée s'est écoulée depuis que la première portion d'ouverture et de fermeture (B1) a commuté à l'état ouvert.

3. Dispositif de sécurité (50, 50A) selon la revendication 1 ou 2, dans lequel
au moment du gonflage et du déploiement du coussin gonflable (1), la portion d'allumage (3) fonctionne à un moment où le fluide mixte s'écoule à travers le premier chemin d'écoulement (4).

4. Dispositif de sécurité (50) selon l'une quelconque des revendications 1 à 3, dans lequel
la source d'alimentation en oxygène est l'air présent dans l'atmosphère à l'extérieur du premier chemin d'écoulement (4), et
la section d'introduction (6) est configurée pour permettre à l'air de s'écouler dans le premier chemin d'écoulement (4) depuis l'extérieur du premier chemin d'écoulement (4) et pour empêcher le fluide de s'écouler depuis l'intérieur du premier chemin d'écoulement (4) vers l'extérieur du premier chemin d'écoulement (4).

5. Dispositif de sécurité (50) selon la revendication 4, dans lequel
la section d'introduction (6) comprend
un orifice de communication (61) formé dans une paroi de tube (2a) qui définit le premier chemin d'écoulement (4) et permet une communication entre l'intérieur et l'extérieur du premier chemin d'écoulement (4),
un clapet anti-retour (62) disposé pour ouvrir et fermer l'orifice de communication (61),
une portion d'étranglement (63) disposée sur la paroi de tube (2a) de telle sorte que son aire de section transversale soit inférieure aux aires de section transversale des portions en avant et en arrière de ladite portion dans le premier chemin d'écoulement (4), et
le clapet anti-retour (62) est ouvert en raison d'une chute de pression se produisant quand l'hydrogène traverse la portion du premier chemin d'écoulement (4) et l'air s'écoule dans le premier chemin d'écoulement (4) .

6. Dispositif de sécurité (50A) selon l'une quelconque des revendications 1 à 3, comprenant en outre :
un deuxième réservoir (7) servant de source d'alimentation en oxygène rempli d'oxygène ;
un deuxième chemin d'écoulement (9) configuré pour guider l'oxygène du deuxième réservoir (7) vers la section d'introduction (6A) ; et
une deuxième portion d'ouverture et de fermeture (B2) disposée dans le deuxième chemin d'écoulement (9), dans lequel
avant de gonfler et de déployer le coussin gonflable (1), la deuxième portion d'ouverture et de fermeture (B2) ferme le deuxième chemin d'écoulement (9), et
au moment du gonflage et du déploiement du coussin gonflable (1), la deuxième portion d'ouverture et de fermeture (B2) ouvre le deuxième chemin d'écoulement (9) .

7. Dispositif de sécurité (50, 50A) selon l'une quelconque des revendications 1 à 6, dans lequel
la section d'introduction (6, 6A) est disposée à une position en aval de la première portion d'ouverture et de fermeture (B1) dans le premier chemin d'écoulement (4), et est disposée à une position telle que la longueur du chemin d'écoulement (L2) depuis la section d'introduction (6, 6A) jusqu'à la portion d'allumage (3) est inférieure à la longueur du chemin d'écoulement (L1) depuis la première portion d'ouverture et de fermeture (B1) jusqu'à la section d'introduction (6, 6A).

8. Dispositif de sécurité (50, 50A) selon l'une quelconque des revendications 1 à 7, dans lequel
la première portion d'ouverture et de fermeture (B1) est disposée à un orifice d'entrée (41) d'hydrogène dans le premier chemin d'écoulement (4).

9. Dispositif de sécurité (50, 50A) selon la revendication 8, dans lequel
à l'état fermé, la première portion d'ouverture et de fermeture (B1) permet une communication de l'intérieur du premier chemin d'écoulement (4) avec l'atmosphère à l'extérieur du premier chemin d'écoulement (4) et permet ainsi à l'air de s'écouler dans le premier chemin d'écoulement (4) depuis l'extérieur du premier chemin d'écoulement (4).

10. Dispositif de sécurité (50, 50A) selon la revendication 8 ou 9, dans lequel
le premier chemin d'écoulement (4) est disposé à une position élevée d'un côté amont vers un côté aval.

11. Dispositif de sécurité (50, 50A) selon l'une quelconque des revendications 1 à 10, dans lequel
un orifice d'entrée (41) d'hydrogène dans le premier chemin d'écoulement (4) est disposé à un niveau supérieur ou égal à une portion d'extrémité supérieure d'un espace de logement (202) du premier réservoir (20).

12. Dispositif de sécurité (50, 50A) selon l'une quelconque des revendications 1 à 11, dans lequel
le dispositif de sécurité (50, 50A) est monté dans un véhicule (100, 100A), et
le véhicule (100, 100A) utilise l'hydrogène rempli dans le premier réservoir (20) comme source d'entraînement.

13. Procédé pour faire fonctionner un dispositif de sécurité (50, 50A), comprenant :
la préparation d'un dispositif de sécurité (50, 50A) comprenant
un coussin gonflable (1) alimenté avec de la vapeur d'eau pour le gonfler et le déployer,
une portion d'allumage (3) configurée pour enflammer un fluide mixte constitué d'hydrogène et d'oxygène afin de générer de la vapeur d'eau à fournir au coussin gonflable (1), et
un premier chemin d'écoulement (4) configuré pour guider de l'hydrogène vers la portion d'allumage (3) depuis un premier réservoir (20) rempli d'un volume d'hydrogène dans un état pressurisé, le volume d'hydrogène dans le premier réservoir (20) dépassant un volume approprié pour le gonflage et le déploiement du coussin gonflable (1),
**caractérisé par**
**le fait que** la préparation du dispositif de sécurité (50, 50A) comprend en outre
une première portion d'ouverture et de fermeture (B1) disposée dans le premier chemin d'écoulement (4),
une section d'introduction (6, 6A) disposée à une position en aval de la première portion d'ouverture et de fermeture (B1) dans le premier chemin d'écoulement (4), et
un chemin d'écoulement de vapeur d'eau (5) configuré pour guider la vapeur d'eau générée par la portion d'allumage (3) depuis la portion d'allumage (3) jusqu'au coussin gonflable (1) ;
la commutation temporaire de la première portion d'ouverture et de fermeture (B1) d'un état fermé où un flux d'hydrogène provenant du premier réservoir (20) est interrompu à un état ouvert où le flux d'hydrogène provenant du premier réservoir (20) est ouvert, pour fournir le volume approprié d'hydrogène à la portion d'allumage (3) ;
le mélange de l'oxygène avec l'hydrogène circulant à travers le premier chemin d'écoulement (4) en introduisant, via la section d'introduction (6, 6A) dans le premier chemin d'écoulement (4), l'oxygène fourni par une source d'alimentation en oxygène ; et
l'allumage d'un fluide mixte constitué d'hydrogène et d'oxygène par la portion d'allumage (3) pour générer de la vapeur d'eau.
